Europäisches Patentamt

(19) European Patent Office

Office européen des brevets

(11) Numéro de publication: **0 121 451**
**B1**

(12) **FASCICULE DE BREVET EUROPEEN**

(45) Date de publication du fascicule du brevet: **18.05.88**

(21) Numéro de dépôt: **84400370.7**

(22) Date de dépôt: **24.02.84**

(51) Int. Cl.⁴: **G 21 C 3/32,** G 21 C 7/10

(54) **Assemblage combustible à tubes-guides refroidis pour un réacteur nucléaire.**

(30) Priorité: **25.02.83 FR 8303155**

(43) Date de publication de la demande:
**10.10.84 Bulletin 84/41**

(45) Mention de la délivrance du brevet:
**18.05.88 Bulletin 88/20**

(84) Etats contractants désignés:
**AT BE CH DE GB IT LI SE**

(56) Documents cités:
**FR-A-2 115 003**
**GB-A-2 076 580**
**GB-A-2 102 617**
**LU-A- 79 743**
**US-A-3 930 938**
**US-A-4 229 259**

(73) Titulaire: **FRAMATOME**
**Tour Fiat 1 place de la Coupole**
**F-92400 Courbevoie (FR)**

(72) Inventeur: **Millot, Jean-Paul**
**1 allée des Roitelets**
**F-78340 Elancourt (FR)**
Inventeur: **Desfontaines, Guy**
**18 rue Jean Jaurès**
**F-92800 Puteaux (FR)**
Inventeur: **Babin, Michel**
**148 avenue Jean Jaurès**
**F-93500 Pantin (FR)**

(74) Mandataire: **Fort, Jacques**
**CABINET PLASSERAUD 84, rue d'Amsterdam**
**F-75009 Paris (FR)**

Courier Press, Leamington Spa, England.

EP 0 121 451 B1

## Description

L'invention concerne un assemblage combustible pour un réacteur nucléaire, en particulier pour un réacteur nucléaire à eau sous pression, du type comprenant un faisceau de crayons combustibles parallèles maintenus dans une ossature comportant des grilles entretoises pour le maintien transversal des crayons, des tubes guides remplaçant certains crayons du faisceau et servant au guidage de barres cylindriques d'un matériau absorbant les neutrons à l'intérieur de l'assemblage, et des embouts fixés sur les extrémités de certains au moins des tubes guides ayant une paroi sensiblement cylindrique dont le diamètre interne est notablement supérieur au diamètre des barres, ces derniers tubes guides présentant des ensembles de surfaces de guidage et de centrage des barres en saillie vers l'intérieur de ces tubes, constituées chacune par repoussage de la paroi du tube correspondant.

Les tubes guides permettant le guidage de barres en matériau absorbant les neutrons à l'intérieur de l'assemblage. Certains de ces tubes guides, dont les extrémités sont reliées aux embouts, assurent également la rigidité de l'assemblage. D'autres tubes guides qui ne sont fixés qu'à l'un des embouts d'extrémité peuvent servir au maintien des grilles entretoises, en plus de leur fonction de guidage.

Les assemblages combustibles sont généralement disposés verticalement dans le coeur du réacteur, si bien que l'un des embouts d'extrémité constitue l'embout inférieur et l'autre embout l'embout supérieur de l'assemblage.

Le fluide de refroidissement du réacteur, c'est-à-dire l'eau sous pression, traverse le coeur de bas en haut et circule à l'intérieur des assemblages en contact avec les crayons combustibles dont elle prélève les calories.

Les barres ou crayons de matériau absorbant introduites dans les tubes guides sont rassemblées sous forme de grappes qu'on déplace dans leur ensemble à l'intérieur des assemblages pour régler la puissance du réacteur. Ces barres cylindriques s'engagent dans les tubes guides avec un très faible jeu, si bien quel l'eau de refroidissement ne circule pratiquement pas à l'intérieur des tubes guides. Cela n'a d'ailleurs pratiquement pas d'inconvénient puisque les barres absorbantes s'échauffent peu et que le refroidissement par la surface extérieure du tube guide est suffisant.

Le document GB—A—2 076 580 décrit un assemblage du type ci-dessus défini dans lequel, pour limiter l'usure des tubes guides qui contiennent des grappes de crayons absorbants par suite des vibrations de la partie terminale des crayons, on constitue les surfaces de centrage par des déformations locales de la paroi du tube vers l'intérieur. Ces déformations, sont localisées, espacées et de faible profondeur. Le jeu qui subsiste entre les parties non déformées de chaque tube et le crayon est faible, étant seulement destiné à réduire les frottements.

Il n'est nulle part fait mention d'une circulation de fluide de refroidissement entre tubes guides et crayons.

On connait par ailleurs un réacteur nucléaire à rendement amélioré (EP—A—0 108 020) dans lequel on fait varier le spectre neutronique dans le coeur, par introduction dans les assemblages d'un nouveau type de barres en matériau absorbent qui produit une variation de spectre à la fois par diminution du volume d'eau dans les tubes guides et par absorption des neutrons de plus faible énergie. De façon préférentielle, ces barres de variation de spectre sont en un matériau fertile tel que l'uranium appauvri en uranium 235.

Dans ce cas, l'échauffement des barres en uranium appauvri qui sont le siège de réactions neutroniques est beaucoup plus important que dans le cas de barres de commande en matériau absorbant.

Il devient nécessaire de provoquer une circulation d'eau à l'intérieur des tubes guides réservés pour les barres en matériau fertile.

Si on augmente le jeu entre les tubes guides et les barres en matériau fertile, les barres risquent de prendre une position excentrée dans le tube guide. Le refroidissement de la barre de variation de spectre est alors dissymétrique, ce qui conduit à des risques de vaporisation de l'eau dans la zone voisine de la ligne de contact et par suite à une augmentation de la température de la barre entraînant la dégradation du matériau de gainage et des déformations.

De façon plus générale, la structure actuelle des tubes guides des assemblages combustibles ne permet pas un refroidissement efficace de la barre de matériau absorbant introduite dans le tube guide. Si cette barre s'échauffe, par exemple dans le cas où elle est le siège de réactions neutroniques dégageant de la chaleur, la lame d'eau de faible épaisseur subsistant entre la barre de matériau absorbant et la surface intérieure du tube guide risque de bouiller, ce qui réduit encore les échanges thermiques de refroidissement de la barre. L'échauffement de la barre peut alors conduire d'une part à des risques de caléfaction et de corrosion, d'autre part à sa déformation, ce qui rend difficile ou impossible son déplacement ultérieur dans le tube guide.

Le but de l'invention est donc de fournir un assemblage combustible à tubes-guides réfroidis qui permette un refroidissement efficace des barres de matériau absorbant sans que sa structure, son élaboration et son montage soient rendus beaucoup plus complexes que pour un assemblage combustible de l'art antérieur.

Dans ce but, les ensembles de surfaces de guidage et de centrage sont constitués soit par au moins trois plis (ou nervures) longitudinaux, soit par au moins un pli (ou une nervure) longitudinal en hélice dirigés vers l'intérieur, s'étendant tout le long du tube, permettant tout à la fois de guider et de centrer la barre et de réserver des espaces de circulation pour le fluide de refroidissement, entre le tube et la barre en matériau absorbant.

Afin de bien faire comprendre l'invention, on va maintenant décrire à titre d'exemple non limitatif,

en se référant aux figures jointes en annexe, un assemblage combustible pour un réacteur nucléaire à rendement amélioré tel que décrit dans le document EP—A—0 108 020.

La figure 1 représente une vue en élévation de l'assemblage.

La figure 2 représente une vue en coupe suivant AA de la figure 1.

La figure 2a représente une vue en coupe transversale d'un tube guide de l'assemblage représenté aux figures 1 et 2.

La figure 3 représente une vue en coupe par un plan vertical de la partie inférieure de deux tubes guides.

La figure 4 représente une variante de réalisation d'un tube-guide d'un assemblage suivant l'invention.

La figure 4a représente une section transversale du tube guide représenté à la figure 4.

La figure 5 représente une seconde variante d'un tube guide d'un assemblage suivant l'invention.

La figure 5a est une section transversale du tube guide représenté à la figure 5.

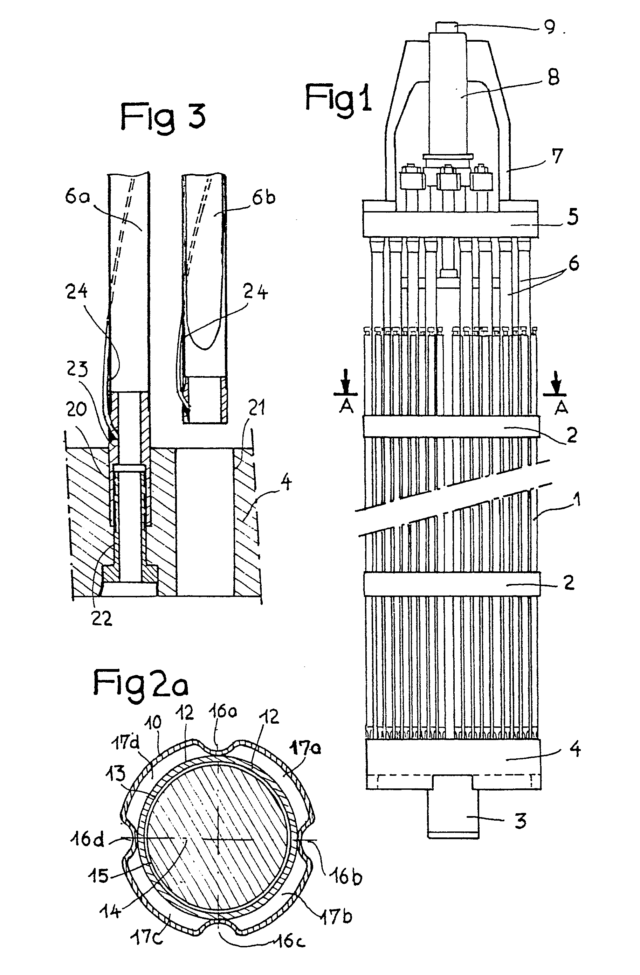

Sur la figure 1, on voit un assemblage combustible destiné à un réacteur nucléaire à rendement amélioré tel que décrit dans le document EP—A—0 108 020. Un tel assemblage combustible comporte des tubes guides pour le déplacement de grappes de variation de spectre comportant de crayons fertiles et d'autres tubes guides pour le déplacement de barres de commande de la puissance du réacteur.

L'assemblage combustible comporte un faisceau de crayons combustibles 1 maintenu transversalement par des grilles entretoises 2 espacées suivant la longueur des crayons qui correspond à la hauteur de l'assemblage, un embout inférieur 4 et un embout supérieur 5 ainsi qu'un ensemble de tubes guides 6 tous reliés à l'embout supérieur 5.

L'embout supérieur 5 est solidaire d'une structure 7 servant de butée pour les grappes de crayons absorbant et permettant la fixation d'un cylindre 8 servant d'amortisseur hydraulique de fin de course pour le pommeau 9 de la grappe de crayons fertiles de variation de spectre. L'embout inférieur 4 est solidaire d'une pièce de centrage 3 de l'assemblage qui sert également à la protection du dispositif d'accrochage de l'assemblage sur le fond support de coeur.

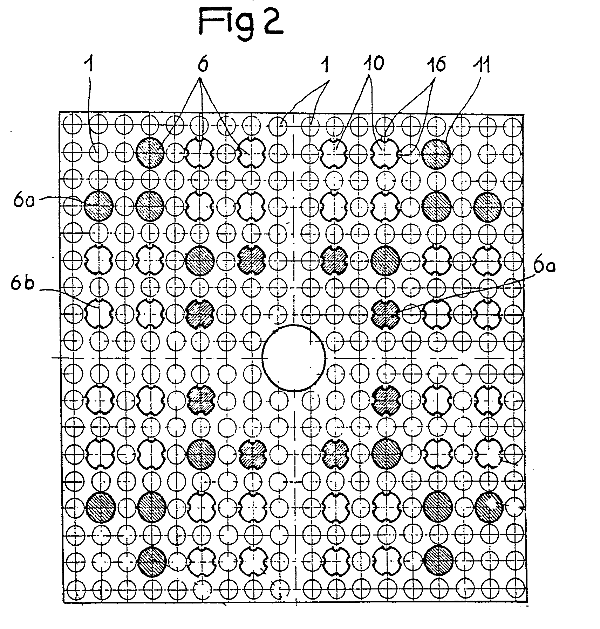

Sur la figure 2, on voit le réseau des crayons combustibles 1 dans toute la section de l'assemblage. Certaines positions des crayons 1 sont occupées par des tubes guides 6 qui sont de deux types différents. Les uns, tels que le tube 11, ont une section circulaire d'un type classique et permettent le guidage de barres de commande en matériau absorbant, pour le pilotage du réacteur. L'ensemble de l'assemblage comporte seize tubes 11 pour le guidage d'une grappe de crayons absorbants.

Les autres, tels que le tube 10, ont une section quadrifoliée et sont utilisés pour le guidage des barres de crayons fertiles de variation de spectre, en uranium appauvri. L'ensemble de l'assemblage comporte quarante tubes guides tels que 10 permettant le guidage de la grappe de barres de variation de spectre.

Comme indiqué dans la demande de brevet français 82-18012, la grappe de barres de pilotage et la grappe de variation de spectre sont montées de façon coaxiale.

Sur la figure 2a on voit un tube à section quadrifoliée 10 à l'intérieur duquel est engagée une barre de variation de spectre 12 comportant une gaine 13 et un remplissage d'uranium appauvri 14. Entre la gaine 13 et le remplissage d'uranium 14 est ménagé un jeu de très faible épaisseur 15 permettant la dilatation ou le gonflement de l'uranium 14.

La section quadrifoliée du tube guide 10 comporte quatre surfaces de guidage $16_a$, $16_b$, $16_c$ et $16_d$ en saillies vers l'intérieur du tube guide 10, sur toute la longueur de celui-ci. Ces surfaces de guidage 16 sont constituées par repoussage de la paroi du tube 10 vers l'intérieur suivant quatre génératrices, par exemple à l'aide d'un galet de formage ou par passage dans une filière. La barre de variation de spectre 12 est guidée par les saillies 16 lors de son déplacement dans le tube guide. Quatre espaces de circulation d'eau $17_a$, $17_b$, $17_c$, $17_d$ sont ménagés entre la surface intérieure du tube 10 et la surface extérieure de la gaine 13 de la barre de variation de spectre, entre deux saillies 16 successives. A l'intérieur de ces espaces 17 l'eau de refroidissement peut circuler et refroidir la surface extérieure de la barre fertile 12.

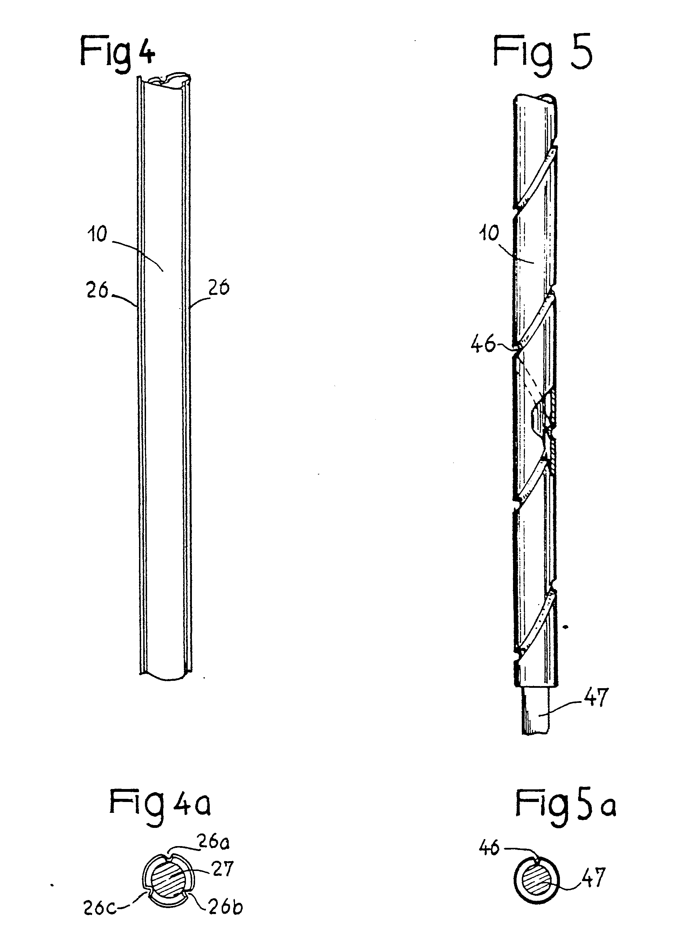

Sur la figure 3, on voit l'embout inférieur 4 de l'assemblage percé de trous 20 et 21 en face de deux tubes guides $6_a$ et $6_b$.

Le trou 20 permet la fixation de l'extrémité du tube guide $6_a$ sur l'embout 4 par l'intermédiaire d'une douille creuse filetée démontable 22 venant se visser à l'intérieur de l'extrémité 23 du tube $6_a$.

L'extrémité du tube $6_b$ n'est pas fixée sur l'embout inférieur 4 et le trou 21 sert uniquement pour le passage de l'eau de refroidissement vers l'intérieur de l'assemblage.

Sur tous les tubes 6 sont enroulés en hélice des fils métalliques 24 permettant d'améliorer le refroidissement des tubes guides par leur surface extérieure en cassant la couche limite froide qui a tendance à se former autour des tubes guides lors de la circulation de l'eau de refroidissement. Ces fils enroulés en hélice sur tous les tubes guides et fixés à la partie inférieure et à la partie supérieure de ces tubes permettent donc d'homogénéiser la température de l'eau de refroidissement en circulation dans l'assemblage.

En se reportant à la figure 2, on voit que pour l'ensemble de l'assemblage, on utilise vingt-quatre tubes guides tels que $6_a$ reliés à la fois à l'embout supérieur et à l'embout inférieur et participant à la rigidification de l'ossature de l'assemblage. Ces tubes $6_a$ sont constitués par l'ensemble des tubes 11 de guidage des barres de commande et certains des tubes 10 de guidage des barres de variation de spectre.

Les autres tubes 10 de guidage des barres de variation de spectre sont tous des tubes 6$_b$ qui, outre la fixation des grilles entretoises, assurent principalement le guidage des barres de variation de spectre.

Sur les figures 4 et 4a, on voit une première variante de réalisation des tubes 10 pour le guidage des barres de variation de spectre. Ces tubes comportent trois surfaces de guidage 26 dirigées suivant trois génératrices à 120° du tube consituées par repoussage de la paroi du tube le long de ces trois génératrices. On voit sur la figure 4a que ces surfaces de guidage de la barre 27 permettent de réserver trois espaces de circulation de l'eau de refroidissement.

Sur les figures 5 et 5a, on voit une deuxième variante de réalisation d'un tube guide suivant l'invention dont la paroi comporte un ensemble 46 de surfaces de guidage en saillie vers l'intérieur du tube et disposées suivant une hélice ayant pour axe l'axe du tube. Cette surface en saillie 46 permet le guidage de la barre de variation de spectre 47 tout en ménageant un espace continu de circulation d'eau de refroidissement autour de cette barre 47.

La surface 46 en saillie vers l'intérieur du tubes est obtenue par repoussage de la paroi du tube. Cette opération peut être obtenue en faisant tourner le tube et en le déplaçant en translation suivant son axe sous un galet de formage ou en passant dans une filière réalisant la déformation en hélice.

On voit que les principaux avantages de l'assemblage combustible suivant l'invention sont de permettre un refroidissement efficace des barres de matériau absorbant déplacées dans les tubes guides tout en évitant de compliquer les opérations de formage et de montage des tubes guides dans l'assemblage.

L'invention ne se limite par aux modes de réalisation qui ont été décrits; c'est ainsi qu'on peut prévoir des surfaces de guidage en saillie dans la paroi des tubes guides d'une forme et d'une répartition différentes de celles qui ont été décrites.

On peut également prévoir une répartition des tubes participant à la rigidification de l'assemblage différente de celle qui a été décrite.

Enfin, l'assemblage combustible suivant l'invention peut être utilisé non seulement dans un réacteur nucléaire à rendement amélioré comportant des grappes de variation de spectre, mais également dans tout autre type de réacteur nucléaire où peut se produire un échauffement et une déformation des barres de commande déplacées dans les tubes guides des assemblages.

**Revendications**

1. Assemblage combustible à tubes guides refroidis pour un réacteur nucléaire, comprenant un faisceau de crayons combustibles parallèles maintenus dans une ossature comportant des grilles entretoises (2) pour le maintien tranversal des crayons (1), des tubes guides (6) remplaçant certains crayons (1) du faisceau et servant au guidage de barres cylindriques (12) d'un matériau absorbant les neutrons à l'intérieur de l'assemblage, et des embouts (4, 5) fixés sur les extrémités de certains au moins des tubes guides (6) ayant une paroi sensiblement cylindrique dont le diamètre interne est notablement supérieur au diamètre des barres, ces derniers tubes guides présentant des ensembles de surfaces de guidage et de centrage des barres (12) en saillie vers l'intérieur de ces tubes, constituées chacune par repoussage de la paroi du tube correspondant, caractérisé en ce que ces surfaces de guidage et de centrage sont constituées soit par au moins trois plis (ou nervures) longitudinaux (16), soit par au moins un pli (ou nervure) longitudinal en hélice (46) dirigés vers l'intérieur s'étendant tout le long du tube, permettant tout à la fois de guider et de centrer la barre dans le tube et de réserver des espaces de circulation pour le fluide de refroidissement du réacteur, entre le tube et la barre.

2. Assemblage combustible suivant la revendication 1, caractérisé en ce que les plis sont dirigés suivant au moins trois génératrices du tube et en ce que chaque pli à un contact sensiblement linéaire avec la barre.

3. Assemblage selon la revendication 2, caractérisé en ce que les plis (16) sont au nombre de quatre et répartis le long de quatre génératrices du tube guide écartées de 90°.

4. Assemblage suivant la revendication 1, 2 ou 3, pour un réacteur nucléaire à variation de spectre, caractérisé en ce que les tubes guides destinés à recevoir une barre cylindrique de variation de spectre constituent seuls lesdits certains tubes guides.

5. Assemblage combustible suivant la revendication 1, 2 ou 3, caractérisé en ce que les dits certains tubes guides sont destinés à recevoir des barres en matériau fertile de variation de spectre, de forme cylindrique; et en ce que les tubes guides restants (11) sont prévus pour recevoir des barres de pilotage cylindriques en matériau absorbant les neutrons et ont une surface interne de section circulaire uniforme laissant aux barres de pilotage un jeu de guidage.

6. Assemblage combustible selon l'une quelconque des revendications 1 à 5, caractérisé en ce que lesdits certains tubes guides sont pour partie fixés uniquement à l'embout supérieur tandis que les autres premiers tubes guides sont fixés aux deux embouts.

**Patentansprüche**

1. Brennstoffbündel mit gekühlten Führungsrohren für einen Kernreaktor, der ein Bündel von parallelen Brennstäben aufweist, die in einem Tragwerk gehalten sind, welches Abstandhalteroste (2) zur Querhalterung der Stäbe (1), Führungsrohre (6), welche bestimmte der Stäbe (1) des Bündels ersetzen und zur Führung von zylindrischen Stangen (12) aus einem Neutronen absorbierenden Material im Inneren des Brennstoffbündles dienen, und Endstücke (4, 5) aufweist, die an den Enden zumindest bestimmter Führungsrohre (6) befestigt sind, welche eine im wesentlichen zylindrische Wandung haben, deren Innendurchmesser beträchtlich größer als der Durchmesser der Stangen ist, wobei die letzteren Führungsrohre Anordnungen aus Führungsflächen und Zentrierflächen für die Stangen (12) aufweisen, die in das Innere dieser Rohre vorspringen und je durch Einbuchten der Wandung des entsprechenden Rohres gebildet sind, dadurch gekennzeichnet, daß die Führungsflächen und Zentrierflächen einerseits aus zumindest drei Längsfalten (oder Längsrinnen) (16) oder aus zumindest einer wendelförmigen Längsfalte (oder einer Längsrinne) (46) gebildet sind, die nach innen gekehrt sind, sich über die gesamte Länge des Rohres erstrecken und es ermöglichen, die Stange im Rohr sowohl zu führen als auch zu zentrieren sowie Raum für die Zirkulation der Reaktorkühlflüssigkeit zwischen dem Rohr und der Stange freizulassen.

2. Brennstoffbündel nach Anspruch 1, dadurch gekennzeichnet, daß die Falten entlang von zumindest drie Erzeugenden des Rohres gerichtet sind und daß jede Falte die Stange im wesentlichen linear berührt.

3. Brennstoffbündel nach Anspruch 2, dadurch gekennzeichnet, daß vier Falten (16) vorgesehen und entlang von vier um 90° versetzten Erzeugenden des Führungsrohres angeordnet sind.

4. Brennstoffbündel nach einem der Ansprüche 1 bis 3, für einen Kernreaktor mit Veränderung des Spektrums, dadurch gekennzeichnet, daß alleine die Führungsrohre zur Aufnahme einer zylindrischen Stange zur Veränderung des Spektrums die erwähnten bestimmten Führungsrohre bilden.

5. Brennstoffbündel nach einem der Ansprüche 1 bis 3, dadurch gekennzeichnet, daß die erwähnten bestimmten Führungsrohre zur Aufnahme von zylindrischen Stangen aus brütbarem Material zur Veränderung des Spektrums dienen, und daß die verblieibenden Führungsrohre (11) zur Aufnahme von zylindrischen Steuerstangen aus Neutronen absorbierendem Material bestimmt sind und eine Innenfläche mit gleichförmigem Kreisquerschnitt haben, welcher den Steuerstangen ein Führungsspiel beläßt.

6. Brennstoffbündel nach einem der Ansprüche 1 bis 5, dadurch gekennzeichnet, daß die erwähnten bestimmten Führungsrohre zum Teil lediglich am oberen Endstück befestigt sind, wogegen die anderen ersteren Führungsrohre an beiden Endstücken befestigt sind.

**Claims**

1. Fuel assembly with cooled guide tubes for a nuclear reactor, comprising a bundle of parallel fuel rods held in a framework comprising spacer grids (2) for the transversal support of the rods (1), guide tubes (6) replacing certain rods (1) of the bundle for guidance of cylindrical rods (12) containing neutron absorbing material inside the assembly and end nozzles (4, 5) fixed on the ends of at least certain of the guide tubes (6), having a substantially cylindrical wall whose internal diameter is substantially greater than the diameter of the rods, the latter guide tubes having sets of surfaces for guiding and centering the rods (12) which project toward the interior of the tubes, each produced by embossing of the wall of the corresponding tube, characterized in that the guiding and centering surfaces comprise either at least three longitudinal folds (or ribs) (12), or at least one helical longitudinal fold (or rib) (46), inwardly directed and extending throughout the length of the tube, which simultaneously ensure guiding and centering of the rod within the tube and reserve spaces for a flow of the reactor cooling fluid between the tube and the rod.

2. Fuel assembly according to claim 1, characterized in that the folds are directed along at least three generatrices of the tube and in that each fold has a substantially linear contact with the rod.

3. Assembly according to claim 2, characterized in that there are four folds (16) distributed along four generatrices of the guide tube separated by 90°.

4. Assembly according to claim 1, 2 or 3 for a spectrum variation nuclear reactor, characterized in that the guide tubes for receiving a spectrum variation cylindrical rod are the only tubes which constitute said certain guide tubes.

5. Fuel assembly according to claim 1, 2 or 3, characterized in that said certain guide tubes are for receiving rods of fertile material for spectrum variation, of cylindrical shape, and in that the other guide tubes (11) are arranged for receiving cylindrical control rods of neutron absorbing material and have an internal surface of uniform circular cross-section providing a guiding clearance for the control rods.

6. Fuel assembly according to any one of claims 1—5, characterized in that some of said certain guide tubes are only secured to the upper end nozzle while the other first guide tubes are secured to both end nozzles.

Fig 3

Fig 1

Fig 2a

# Fig 2

# Fig 4

10

26          26

# Fig 5

10

46

47

# Fig 4a

26a
27
26c          26b

# Fig 5a

46          47